(19) Europäisches Patentamt
European Patent Office
Office européen des brevets

(11) Veröffentlichungsnummer: **0 019 885**
**A1**

(12) **EUROPÄISCHE PATENTANMELDUNG**

(21) Anmeldenummer: **80102899.4**

(22) Anmeldetag: **23.05.80**

(51) Int. Cl.³: **H 02 H 6/00**

(30) Priorität: **24.05.79 JP 64457/79**

(43) Veröffentlichungstag der Anmeldung: **10.12.80 Patentblatt 80/25**

(84) Benannte Vertragsstaaten: **AT CH DE FR GB LI**

(71) Anmelder: **FUJI ELECTRIC CO. LTD., 1-1, Tanabeshinden, Kawasaki-ku, Kawasaki 210 (JP)**

(72) Erfinder: **Taketani, Koreyuki, Dipl.-Ing., 1973-65 Tamai, Kumagaya-shi, Saitama (JP)**
Erfinder: **Umezato, Yasumasa, Dipl.-Ing., 557 Nagata-cho, Minami-ku, Yokohama-shi, Knagawa (JP)**
Erfinder: **Saeda, Shiroh, Dipl.-Ing., 4-9-32 Kashiwaza, Ageo-shi, Saitama (JP)**

(74) Vertreter: **Mehl, Ernst, Dipl.-Ing. et al, Postfach 22 01 76, D-8000 München 22 (DE)**

(54) **Anordnung zur Überlastüberwachung.**

(57) Die Erfindung betrifft eine Anordnung zur Überlastüberwachung eines elektrischen Gerätes, insbesondere eines elektrischen Motors.

Hierzu wird als Wärmeabbild des zu überwachenden elektrischen Gerätes eine Schaltung zur Auswertung des Stromintegrals

$$\left(\int_{t_o}^{t_n} i^2 dt\right)$$

in bezug auf die Zeitkonstante des elektrischen Gerätes (1) vom Stillstand heraus vorgesehen, die mit einer Verzögerungsschaltung (10) in Verbindung steht, die ein Schließen des ausgelösten Schalters (2) in Abhängigkeit von der Auswertschaltung (4, 5, 6, 7, 8) und einer vorbestimmbaren Abkühlzeit verhindert.

Hierdurch ist eine Überlastüberwachung geschaffen worden, die sowohl das Wiederstarten als auch für den intermittierenden Betrieb eines Motors zuverlässig einsetzbar ist.

EP 0 019 885 A1

0019885

Fuji Electric Co. Ltd.
Kawasaki, Japan

Unser Zeichen
VPA 79 P 8551 EUR

## Anordnung zur Überlastüberwachung

Die Erfindung bezieht sich auf eine Anordnung zur Überlastüberwachung eines elektrischen Gerätes, insbesondere eines elektrischen Motors, mittels eines über ein Wärmeabbild auslösbaren elektrischen Schalters.

Bei bekannten thermischen Relais zum Schutz von Elektromotoren (DE-AS 10 29 917) ist das Arbeitsprinzip auf die Auslöseverzögerung in Verbindung mit der thermischen Zeitkonstante gestützt, die durch die Wärmekapazität und durch den thermischen Abstrahlungskoeffizient des Bimetallelementes bestimmt ist, um hierdurch das thermische Verhalten der elektrischen Lastanordnung zu simulieren. Eine rotierende Maschine, wie ein elektrischer Motor, jedoch hat unterschiedliche thermische Abstrahlungskoeffizienten im Betriebsfall und im Stillstandsfall, wobei das thermische Relais ebenfalls einen unterschiedlichen Abstrahlungskoeffizient, hervorgerufen durch den Aufbau im Betriebs- und Stillstandsfall,aufweist. In diesem Fall kann das thermische Relais das thermische Verhalten der elektrischen Anordnung nur auf sehr oberflächliche Weise simulieren, so daß auch kein zufriedenstellender Schutz in bezug auf die Belastung der elektrischen Anordnung gewährleistet werden kann.

Beispielsweise wird bei der Verwendung des thermischen Relais zum Schutz eines elektrischen Motors gegen Überlast die thermische Zeitkonstante des Relais so bestimmt, daß die Überlastbedingungen fortbestehen, nachdem der Motor vom kalten Zustand aus gestartet ist, bis das thermische Relais anspricht, wenn eine vorbestimmte

Temperatur erreicht ist. Deshalb entstehen keine Probleme in dem Fall, in dem der elektrische Motor von seinem thermischen kalten Zustand in den Überlastzustand überführt wird. Die Probleme treten jedoch auf, wenn der Motor wieder gestartet wird, nachdem die Überlast unterbrochen ist oder der Motor im intermittierenden Betrieb betrieben wird.

Es ist daher Aufgabe der vorliegenden Erfindung, die vorliegenden Fehler zu beseitigen und einen Überlastschutz zu schaffen, der den elektrischen Motor zufriedenstellend schützen kann und zwar in jedem Betriebszustand, insbesondere beim Wiederstarten oder intermittierenden Betrieb.

Diese Aufgabe kann auf einfache Weise bei einer Anordnung der obengenannten Art dadurch gelöst werden, daß das Wärmeabbild von einer Schaltung zur Auswertung des Stromintegrals in bezug auf die Zeitkonstante des elektrischen Gerätes vom Stillstand heraus gebildet ist und eine Verzögerungsschaltung vorhanden ist, die ein Schließen des ausgelösten Schalters in Abhängigkeit von der Auswertschaltung und einer vorbestimmbaren Abkühlzeit verhindert.

Um zu verhindern, daß die Auswertschaltung bzw. die Verzögerungsschaltung bei jedem Betriebszustand angeworfen wird, ist es vorteilhaft, wenn der Auswertschaltung eine Vergleichsschaltung des Stromistwertes mit dem Stromnennwert (Gedächtnis) vorgeschaltet ist. Der Stromnennwert läßt sich auf einfache Weise in einem Gedächtnis speichern. Weitere vorteilhafte Ausbildungsmöglichkeiten der erfindungsgemäßen Anordnung sind den weiteren Unteransprüchen zu entnehmen.

Anhand der Zeichnung wird der Gegenstand der Erfindung näher beschrieben und die Wirkungsweise näher erläutert.

Ein elektrischer Motor 1 wird durch den Hauptschalter 2, beispielsweise ein elektromagnetisches Schaltgerät, ein- und ausgeschaltet, d.h. die Phasen RST werden mit dem Motor verbunden. Der im elektrischen Motor 1 fliessende Strom wird durch den Stromwandler 3 einer Schutzeinrichtung erfaßt, so daß eine Gleichspannung oder ein Gleichspannungssignal entsprechend dem Motorstrom einem Gleichrichter oder einer Vergleichsschaltung 4 einer zentralen Prozessoreinheit 11 zugeführt ist. Dieses Signal a wird verglichen mit einem Signal In, das aus einem Gedächtnis 5 stammt, das Daten speichert, die dem Nennstrom des Motors 1 entsprechen.

Im Hinblick darauf, daß ein kleinerer Motorstrom als ein vorherbestimmtes Niveau keinen Temperaturanstieg in dem Motor hervorruft, brauchen die auf die Vergleichsschaltung 4 folgenden Stufen beim Signal derart kleiner Größe nicht beaufschlagt zu werden; denn es ist ausreichend, wenn nur der Strom der Prozessoreinheit zugeführt wird, der eine Zunahme der gespeicherten Wärmeeinheiten des Motors hervorruft. Im Falle von $a < 1{,}05 \times In$ wird deshalb die Wirkung der zentralen Prozessoreinheit 11 an der Vergleichsschaltung 4 gestoppt. Nur im Falle von $a \geqq 1{,}05 \times In$ wird der Wert des Signales a in jedem Augenblick einer Recheneinheit 6 zugeführt. In jedem Zeitintervall, der durch die Uhr in der Zentralen Prozessoreinheit bestimmt wird, rechnet die Recheneinheit 6 die Integration $\int_{t_o}^{t_n} i^2 (t)dt$ vom Zeitpunkt $t_o$-$t_n$ solange die Beziehung $a \geqq 1{,}05 \times In$ erfüllt ist (wobei n = 1, 2, ... usw. bedeuten kann). Der integrierte Wert wird verglichen in einem Vergleichsrechner 8 mit dem Wert Max $\int i^2 dt$, der in dem Gedächtnis 7 gespeichert ist und der dem Wert der zulässigen Wärmeaufnahme des elektrischen Motors entspricht. Auf diese Weise kann ein genauerer Schutz erreicht werden, wenn die Zeitintervalle, die durch die Uhr bestimmt sind, enger sind. Im Augenblick tn', in dem die Bedingung $\int_{t_o}^{t_n} i^2(t)dt =$

Max $\int i^2 dt$ erfüllt ist, was sich bei einem Vergleichsprozeß herausstellt, wird ein Auslösekommando tr der zentralen Prozessoreinheit 11 über ein Ausgangsrelais 9 zugeführt. In Abhängigkeit hiervon unterbricht das Relais die Stromversorgung zum Hauptschalter 2, d.h. der Stromkreis wird geöffnet.

Auf der anderen Seite wird im Falle des offenen Hauptkreises (oder im Falle des Abschaltens des Relais durch eine Überstromauslösung und durch einen nicht bezeichneten, von außen betätigbaren Schalter) ein Verzögerungskreisstartsignal s einem Verzögerungskreisgedächtnis 10 von der Vergleichsschaltung 4jedesmal zugeführt, wenn a gleich 0 ist. Das Verzögerungskreisgedächtnis 10 wird zusätzlich vom Vergleichsrechner 8 eingespeist, mit einem Signal V zum Zeitpunkt der Hauptkreisunterbrechung und in Abhängigkeit von der gespeicherten Wärme im elektrischen Motor 1, wie sie zu dieser Zeit durch das $\int_{t_0}^{t_n} i^2 \, dt$ von der Recheneinheit 6 ermittelt wurde. In Übereinstimmung mit dem Signal V wird das Verzögerungskreisgedächtnis 10 gesetzt. Im einzelnen wird im Verzögerungskreisgedächtnis 10 die funktionelle Beziehung zwischen der thermischen Zeitkonstante oder der Verzögerungszeit unter Stillstandsbedingungen des elektrischen Motors 1 und dem $\int_{t_0}^{t_n} i^2 dt$ gespeichert, so daß es teilweise die Verzögerungszeit in Übereinstimmung mit einer derartigen Signalhöhe des Signales V bei geöffnetem Hauptstromkreis bestimmt, das erzeugt wurde, um eine Beziehung zu der gespeicherten Wärme im Motor 1 zu haben. Das Verzögerungsgedächtnis 10 erzeugt zuweilen auch während dieser Verzögerungszeit ein Signal 1 zum Aufrechterhalten des Betriebes des Ausgangsrelais 9, um hierdurch zu verhindern, daß der Hauptschalter 2 wieder geschlossen wird. Die Verzögerungszeit ist gleich groß gewählt wie der Zeitintervall, der notwendig ist, um den Motor 1 auf eine vorher bestimmbare Temperatur abzukühlen. Mit einem derartigen Aufbau wird das Verzögerungskreisgedächtnis 10 jedesmal dann gestartet, sogar im Falle einer höheren als der Nennlast bei intermittierendem Betrieb, wenn das Signal a = 0 ist, so daß die Kühlzeit derart justiert werden kann, daß der Integrationswert von Max $\int i^2 dt$ nicht überschritten wird.

So ist es entsprechend der vorliegenden Erfindung möglich, da hier Mittel vorgesehen sind, die verhindern, daß der Hauptschalter während der notwendigen Abkühlzeit, die bestimmt ist von der Wärme im elektrischen Motor zum Zeitpunkt des Öffnens des Kreises und der thermischen Zeitkonstante des elektrischen Motors unter Stillstandsbedingungen geschlossen wird, nachdem der Hauptkreis des elektrischen Motors geöffnet wurde, einen zufriedenstellenden Überlastschutz für jeden Betriebsfall des elektrischen Motors zu erhalten, insbesondere für das Wiederstarten oder intermittierenden Betrieb des Motors.

Obwohl in der soweit beschriebenen Einrichtung von einem elektrischen Motor als Beispiel der Lastanordnung gesprochen wurde, ist es augenscheinlich, daß die vorliegende Erfindung auch angewandt werden kann bei allen Leistungsgeräten, die unterschiedliche Zeitkonstante unter Last und Stillstandsbedingungen haben.

7 Patentansprüche

1 Figur

1 Elektrischer Motor

2 Hauptschalter, Elektromagnetisches Schaltgerät

3 Schutzeinrichtung

4 Vergleichsschaltung

5 Gedächtnis

6 Recheneinheit

7 Gedächtnis

8 Vergleichsrechner

9 Ausgangsrelais

10 Verzögerungskreisgedächtnis

11 Zentrale

Patentansprüche

1. Anordnung zur Überlastüberwachung eines elektrischen Gerätes, insbesondere eines elektrischen Motors, mittels eines stromabhängig über ein Wärmeabbild auslösbaren elektrischen Schalters, dadurch gekennzeichnet, daß das Wärmeabbild von einer Schaltung zur Auswertung des Stromintegrals (4, 5, 6) in bezug auf die Zeitkonstante des elektrischen Gerätes (1) vom Stillstand heraus gebildet ist und eine Verzögerungsschaltung (10) vorhanden ist, die ein Schließen des ausgelösten Schalters (2) in Abhängigkeit von der Auswertschaltung (4, 5, 6, 7, 8) und einer vorbestimmbaren Abkühlzeit verhindert.

2. Anordnung nach Anspruch 1, dadurch gekennzeichnet, daß der Auswertschaltung eine Vergleichsschaltung (4) des Stromistwertes (a) mit dem Stromnennwert (In) (Gedächtnis) vorgeschaltet ist.

3. Anordnung nach Anspruch 2, dadurch gekennzeichnet, daß der Stromnennwert durch ein Gedächtnis (5) speicherbar ist.

4. Anordnung nach Anspruch 1, 2 oder 3, dadurch gekennzeichnet, daß die Auswertschaltung eine Recheneinheit (6) zur Bildung des Stromintegrals beinhaltet.

5. Anordnung nach Anspruch 4, dadurch gekennzeichnet, daß der Recheneinheit (6) ein Vergleichsrechner (8) zum Vergleich des augenblicklichen Stromintegrals ( $\int_{t_o}^{t_n} i^2 dt$ ) mit einem maximalen Stromintegral (Max $\int i^2 dt$) nachgeschaltet ist, bei deren Übereinstimmung ein Auslösekommando erfolgt.

6. Anordnung nach Anspruch 5, d a d u r c h g e k e n n z e i c h n e t , daß das maximale Stromintegral in einem setzbaren Gedächtnis (7) gespeichert ist.

7. Anordnung nach einem der vorhergehenden Ansprüche, d a d u r c h g e k e n n z e i c h n e t , daß die Auswertschaltung ein Verzögerungskreisgedächtnis (10) beinhaltet, das in Abhängigkeit von der Vergleichsschaltung (4) und dem Vergleichsrechner (8) setzbar der Wiedereinschaltungsverzögerung des elektrischen Schalters dient.

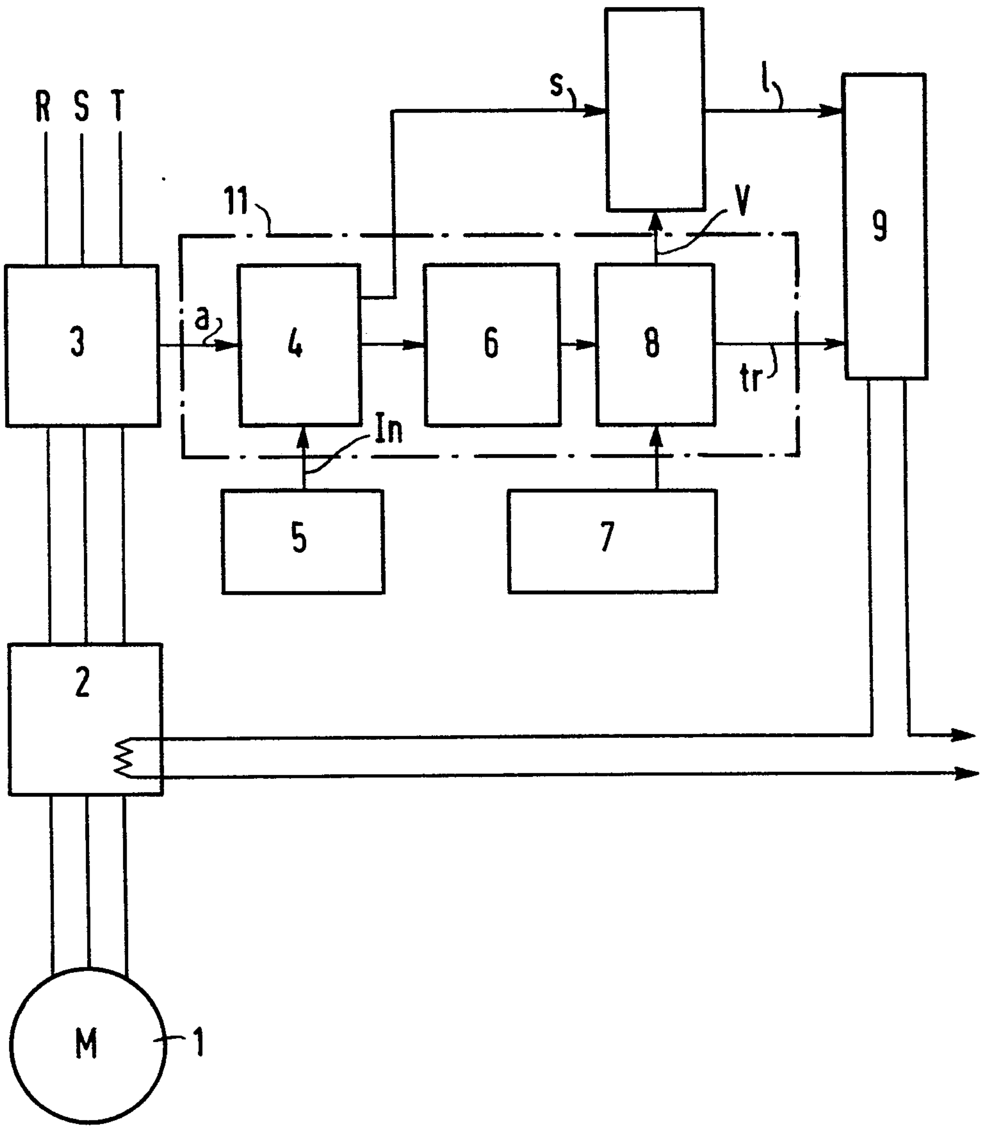
R S T
3
a
4
6
8
11
s
l
V
tr
In
9
5
7
2
M
1

Europäisches Patentamt

# EUROPÄISCHER RECHERCHENBERICHT

0019885

Nummer der Anmeldung

EP 80 10 2899

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 2 286 530 (GENERAL ELECTRIC)<br>* Seite 3, Zeile 24 bis Seite 8, Zeile 19; Abbildung *<br>-- | 1,2,4, 5,7 |
| | FR - A - 2 220 105 (LICENTIA)<br>* Seite 1, Zeilen 27-35; Seite 2, Zeilen 10-35; Seite 3, Zeile 11 bis Seite 4, Zeile 23; Abbildungen 1,2 *<br>---- | 3,6 |

KLASSIFIKATION DER ANMELDUNG (Int. Cl.[3])

H 02 H 6/00

RECHERCHIERTE SACHGEBIETE (Int. Cl.[3])

H 02 H 6/00
7/085

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 16-09-1980 | RUGGIU |